(19) **Europäisches Patentamt**
**European Patent Office**
**Office européen des brevets**

(11) **EP 2 801 955 A1**

(12) **EUROPEAN PATENT APPLICATION**

(43) Date of publication:
**12.11.2014 Bulletin 2014/46**

(51) Int Cl.:
***G06T 19/00*** *(2011.01)*

(21) Application number: **14166201.5**

(22) Date of filing: **28.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.05.2013 EP 13305595**

(71) Applicant: **Thomson Licensing**
**92130 Issy-les-Moulineaux (FR)**

(72) Inventors:
• **Marvie, Jean-Eudes**
**35576 Cesson Sevigné Cedex (FR)**
• **Sourimant, Gael**
**35576 Cesson Sevigné Cedex (FR)**
• **Mocquard, Olivier**
**35576 Cesson Sevigné Cedex (FR)**

(74) Representative: **Huchet, Anne**
**Technicolor**
**1, rue Jeanne d'Arc**
**92443 Issy-les-Moulineaux Cedex (FR)**

(54) **Method and device for visualizing contact(s) between objects of a virtual scene**

(57)     A method for visualizing contact between a first object and at least a second object of a virtual scene commences by first associating a first identifier with first pixels associated with the first object and at least a second identifier with second pixels associated with the at least a second object. Thereafter, for at least one first pixel (50), at least a distance (501, 505) in world space between the at least one first pixel (50) and at least one second pixel (51, 55) located in the neighbourhood of the at least one first pixel (50), is computed. Then at least a contact between the first object and the at least a second object is visualized if the at least a computed distance (501, 505) remains less than a first threshold distance.

**Fig 1**

**(Cont. next page)**

EP 2 801 955 A1

**Fig 6A**

**Fig 6B**

**Description**

**1. Domain of the invention.**

The invention relates to the domain of synthesis image composition and more specifically to the visualization of contacts between objects of the synthesis image, i.e. of a Computer Generated Image (CGI or 3D-CGI). The invention is also understood in the context of live visualization of 3D contacts.

**2. Prior art**

According to the prior art, it is known that Computer Generated Images (CGIs) are generated through the action of rendering a set of 3D (three-dimensional) objects (e.g. geometric objects, lights, etc.) which define a 3D scene (also called virtual scene), given a camera field of view. In film production pipelines implying CGI, modelling and animation are the first steps that are performed. Animations of 3D models are thus generated without lighting and shadowing information. However, this information is crucial when it comes to positioning 3D objects within the 3D scene. For instance, in the case of a walking virtual 3D character, its feet should touch the virtual 3D ground to produce realistic images. However, without shadow visualization, this simple constraint becomes a very tedious task. These problems may only appear at the end of the production process, when lights are set up in the 3D scene, implying a need for a retake of the animation step. Similarly, undesired inter-penetrations may also remain unnoticed until shading is performed.

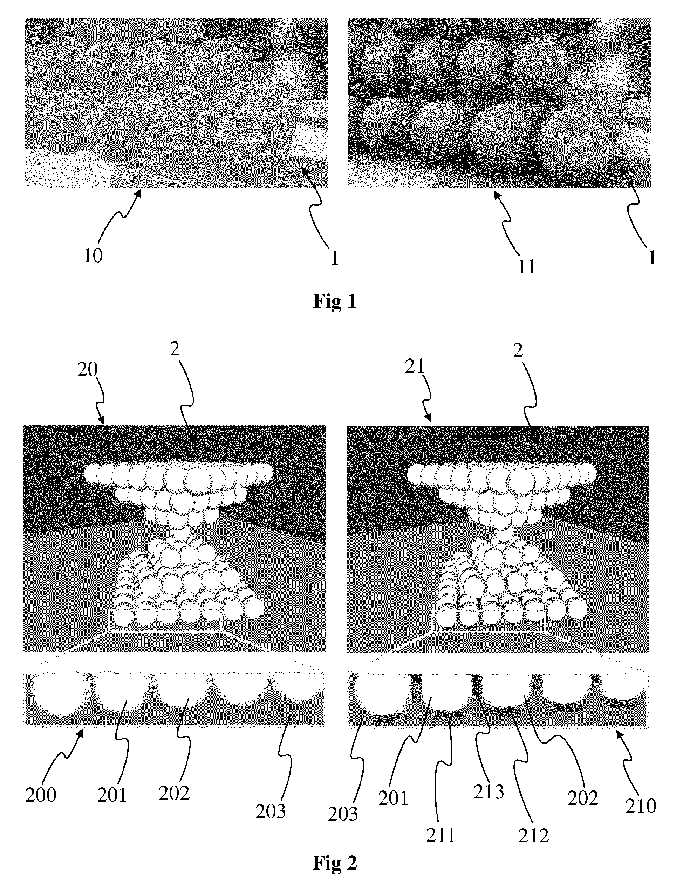

Since contacts or inter penetrations mistakes imply errors in the lighting passes, shadowing techniques, such as described in "Real-time shadows", published in 2011 by Eisemann et al., may be used to determine visually whether two 3D objects are in contact, as illustrated on Figure 1. Figure 1 shows two images 10 and 11 of a virtual scene 1 according to a same point of view. The virtual scene 1 comprises several objects, i.e. a ground on which are stacked spheres. The first image 10 shows the sphere without shadows and the second images shows the same spheres with shadows. Without the shadows, it appears not possible to determine if there is any contact between the spheres and the ground and/or between two spheres; whereas with the shadows, contacts between the spheres and the ground and between two spheres are clearly visible when they exist. However, these shadowing methods are generally too costly for computation in real-time during modeling or animation steps.

**3. Summary of the invention**

The purpose of the invention is to overcome at least one of these disadvantages of the prior art.
More specifically, the purpose of the invention is to visualize in real-time the contact(s) between the objects of a scene while modelling the scene.
The invention relates to a method for visualizing contact between a first object and at least a second object of a virtual scene. , the method comprising the following steps:

- associating a first identifier with first pixels associated with the first object and at least a second identifier with second pixels associated with the at least a second object,
- for at least one first pixel, computing at least a distance in world space between the at least one first pixel and at least one second pixel located in the neighbourhood of the at least one first pixel,
- visualizing at least a contact between the first object and the at least a second object if the at least a computed distance remains less than a first threshold distance.

According to a particular characteristic, the computing of the at least a distance uses geometrical information associated with the at least one first pixel and the at least one second pixel.
Advantageously, the method further comprises a step of visualizing the absence of any contact between the first object and the at least a second object if the at least a computed distance remains greater than the first threshold distance.
According to a specific characteristic, the visualizing comprises at least one of the following acts:

- associating a first predetermined color with said at least one pixel and said at least one second pixel if the at least a computed distance remains less than the first threshold distance,
- associating a second predetermined color with said at least one pixel and said at least one second pixel if the at least a computed distance remains greater than the first threshold distance,
- rendering an information representative of the presence of a contact,
- rendering an information representative of the absence of any contact.

Advantageously, the neighbourhood of the at least one first pixel includes pixels located at a distance less than a second distance threshold from the at least one first pixel.

According to another characteristic, the method further comprises the steps of:

- selecting the second pixel or second pixels having an associated second identifier different from the first identifier,
- computing the at least one distance between the at least one first pixel and the at least one second pixel for only the selected at least one second pixel.

The invention also relates to a device configured for visualizing contact between a first object and at least a second object of a virtual scene, the device comprising at least a processor configured for:

- associating a first identifier with first pixels associated with the first object and at least a second identifier with second pixels associated with the at least a second object,
- for at least one first pixel, computing at least a distance in world space between said at least one first pixel and at least one second pixel located in the neighbourhood of the at least one first pixel,
- visualizing at least a contact between the first object and the at least a second object if the at least a computed distance remains less than a first threshold distance.

Advantageously, the at least a processor is a Graphical Processor Unit (GPU).

The invention also relates to a computer program product comprising instructions of program code for executing steps of the method for visualizing contact between a first object and at least a second object of a virtual scene, when the program is executed on a computer.

### 4. List of figures

The invention will be better understood, and other specific features and advantages will emerge upon reading the following description, the description making reference to the annexed drawings wherein:

- figure 1 shows a virtual scene 1 with and without shadows, according to the prior art;
- figure 2 shows a virtual scene 2 including visualized contacts between objects of the virtual scene 2, according to a particular embodiment of the invention;
- figure 3 shows a virtual scene 3 seen from a viewpoint with objects having contact between them, according to a particular embodiment of the invention;
- figure 4 shows pixels of the image of the virtual scene according to the viewpoint of figure 3, according to a particular embodiment of the invention;
- figure 5 shows some pixels of figure 4 and the distances between them in the world space, according to a particular embodiment of the invention;
- figures 6A and 6B show samplings of respectively the image space and the world space of the virtual scene of figure 3, according to two particular embodiments of the invention;
- figure 7 diagrammatically shows a device implementing a method for visualizing contact between objects of the virtual scene of figure 2 and/or figure 3, according to a particular embodiment of the invention;
- figure 8 shows a method for visualizing contact between objects of the virtual scene of figure 2 and/or figure 3, according to a particular embodiment of the invention.

### 5. Detailed description of embodiments of the invention.

The invention will be described in reference to a particular embodiment of a method for visualizing contact(s) between a first object and one or more second objects of a virtual scene rendered in one or more synthesis images according to one or more points of view. Identifiers are associated with the pixels of the image(s) on which the virtual scene is rendered, or at least the pixels of the part of the image wherein a contact between two objects of the scene may exist. Thus, a first identifier is associated with first pixels of the first object and one or more second identifiers are associated with the one or more second objects of the virtual scene. In order to determine and detect whether a contact exists between the first object and the second object(s), the distance(s) between a first 3D point of the virtual scene in world space (the world space corresponding to the space of the 3D virtual scene) corresponding to a first pixel in the image of the virtual scene and one or more second 3D points of the virtual scene corresponding to one or more second pixels in the image is (are) computed, the second pixel(s) being advantageously located in the neighbourhood of the first pixel. The computing of distances may be reiterated for a plurality of first pixels. The computed distance(s) is (are) compared to a distance threshold as to detect whether a contact between the first object and the second object(s) exist,

4

contact(s) being visualized if the computed distance(s) remains less than the threshold distance.

The computing of the distance(s) and the comparison of the computed distance(s) with a threshold distance are acts requiring low computational needs which enable to detect and visualize contact(s) between objects of a virtual scene in real time, while modelling the virtual scene for example. It then enables to detect possible modelling errors at a very early stage of the virtual scene creation process, avoiding any retaking of the modelling or animation steps after the final rendering of the virtual scene.

**Figure 2** illustrates two images 20 and 21 of a same virtual scene 2 according to a same point of view, according to a specific and non-limitative embodiment of the invention. The virtual scene 2 comprises a plurality of 3D objects (three-dimensional objects), i.e. a stack of spheres 201, 202 leaning on a ground 203. The image 20 represents the virtual scene 2 without visualizing the contacts between the objects of the scene. A part 200 of the image 20 is enlarged as to better show that contacts does not appear between the spheres 201, 202 and/or between the spheres 201, 202 and the ground 203. The image 21 represents the same virtual scene 2 with a visualization of the contacts between the objects when contacts exist. A part 210 of the image 21 is enlarged as to better show the contact 213 between the spheres 201 and 202 and the contacts 211, 212 between the spheres 201, 202 and the ground 203. According to the specific example of figure 2, the contacts between the objects are visualized with a specific color allocated to some of the pixels of the image 21 located between the objects. As the image 21 appears in shades of grey , the contacts between the objects appear in black. Naturally, the color allocated to the pixels belonging to the contact areas may be any color, either predetermined or set by the user creating the scene.

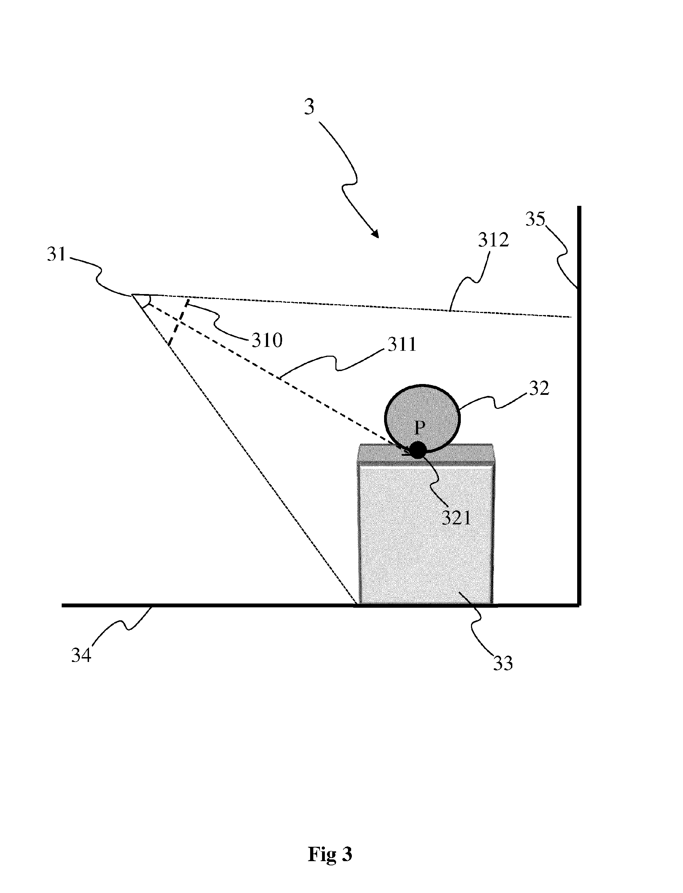

**Figure 3** shows a virtual environment or a virtual scene 3 as seen from a viewpoint 31, for example the user/artist modelling the virtual scene 3, according to a specific and non-limitative embodiment of the invention. The virtual scene 3 comprises one or several virtual objects 32, 33, 34 and 35, modelled according to any method known to those skilled in the art, for example by polygonal modelling, in which the model is assimilated with a set of polygons each defined by the list of summits and edges that compose it, by NURBS (Non uniform rational basic spline) type curve modelling in which the model is defined by a set of curves created via control vertices, by modelling by subdivision of surfaces. By virtual object is understood any virtual representation (obtained by modelling) of an object (real or fictitious) composing a real environment / real scene (for example the ground, a house or a house front, a person, a car, a tree, that is to say any element composing an environment such as a part of a house, a street, a town, the countryside, etc.) or an imaginary element. Each object 32, 33, 34 and 35 of the virtual scene is characterized by a surface covering it, the surface of each object having reflectance properties (corresponding to the proportion of incident light reflected by the surface in one or several directions) that are specific to it. According to the example of figure 3, the user looks at the fragment P 321 of the virtual environment 3 according to an observation direction 311, the fragment P 321 being located in the area comprised between a first object 32 and a second object 33. A fragment advantageously corresponds to a surface element associated with a point of the virtual scene 3 of the size of a pixel of the image that will be displayed to represent the virtual scene 3 on a display screen. A fragment of the virtual scene 3 becomes a pixel in the image if the fragment is visible from the viewpoint associated with the image. For clarity purpose, an element (for example a point) of the virtual scene will be called a fragment when positioning in the space of the 3D virtual scene (the world space) and the same element visible from the point of view 31 will be called pixel when positioning in the space of the image. A fragment visible from the point of view and the corresponding pixel in the image thus refers to one and a same element of the virtual scene and may be mixed up in the rest of the description. Advantageously the fragment is defined by a set of data grouping together one or several of the following data items:

- the rasterization position of the fragment,
- the depth of the fragment at the viewpoint,
- attributes (for example the colour, the texture coordinates),
- the alpha channel representative of the translucent character of the fragment.

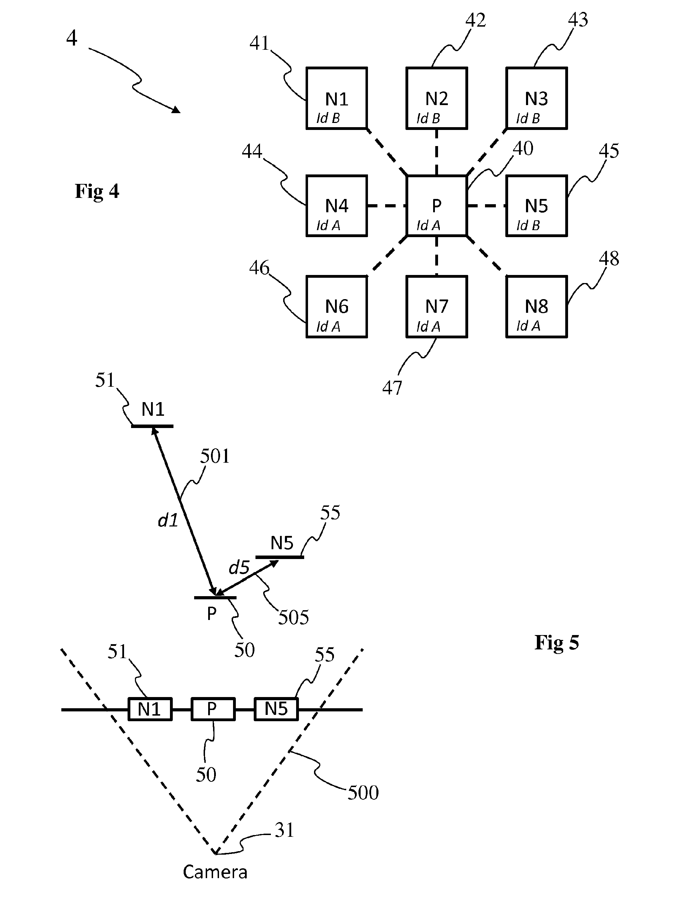

The part of the virtual scene 3 seen from the viewpoint 31 is shown by a viewing cone 312, the viewing cone being composed of a great number of viewing directions including the viewing direction 311. The set of fragments of objects 32 to 35 visible from the viewpoint 31 advantageously forms a surface S of visible fragments. According to a variant, the surface S only comprises a sub-set of the set of visible fragments, for example, the visible fragments of objects 32 and 33 if there is only interest in these objects 32 and 33. Determining whether there is any contact between the first object 32 and the second object 33 corresponds to determining whether the first object 32 and the second object 33 are in close vicinity, or in other words, to determining if some fragments different from P 321 but located in the neighbourhood of P 321 are at a distance from P which is less than a first distance threshold, as explained with more details hereinafter (especially with regard to figures 4 and 5). By neighbourhood or neighbouring area of the fragment P 321 is understood for example the set of fragments, advantageously belonging to the surface S, located at a distance from the fragment P less than a second threshold value, for example at a distance less than a few centimetres or less than 10, 20 or 50 pixels if the distances are expressed in pixels.

An image 310 is associated with the point of view 31, the image 310 comprising a representation of the virtual scene 3 according to the point of view 31. The image 310 corresponds advantageously to an array of X columns and Y rows of pixels, video information being associated with each pixel, the video information associated with a pixel corresponding to the video information associated with the fragment of the virtual scene 3 visible from the point of view along a viewing direction traced from the point of view 31. In other words, the pixels of the image 310 corresponds to the projections of the fragments of the virtual scene 3 visible from the point of view 31 (i.e. the fragments belonging to the surface S) along the viewing directions forming the viewing cone 312. In the rest of the description, the fragment P 321 of the virtual scene may be assimilated to its corresponding pixel in the image 310. A render buffer (also called frame buffer or image buffer) is advantageously associated with the image 310 and comprises information representative of attributes associated with the pixels, an item of attributes information being associated with each pixel of the render buffer. The attributes of a pixel correspond for example to the video information of the pixel, i.e. the component colours (for example RGB for "Red, Green, Blue") or to the component colours + transparency (that is to say $RGB\alpha$), each component being coded on 8, 10 or 12 bits for example.

When a contact between the first object 32 and the second object 33 is detected, the contact is visualized. According to a first exemplary embodiment, no action from the user modelling the virtual scene 3 is required for visualizing the contact, which means that when a contact between two objects is detected, this contact is automatically visualized. According to a second exemplary embodiment, an action from the user modelling the virtual scene 3 is required for triggering the detection and visualization process. For example, the user may require the visualization of any contact between the objects of the virtual scene when the modelling of the whole scene is performed, the action triggering the visualization process corresponding for example to a click on a button of the graphical user interface (GUI) associated with the tool used for modelling the scene. According to another example, as to know whether a contact exist between a first object and one or more second objects, the user selects the first object and the second object (with a mouse or by tapping on the objects if the objects are rendered on a touch screen), the selection triggering the visualization process. According to this example, the user may select more than one second object, for example by using a selecting window for selecting the first object and the plurality of second objects, or by selecting one by one the first and second objects and by signalling the end of the selection (with a click on a dedicated button of the GUI or with a double tap on the screen for example).

The visualization of the contact between the first object and the second object(s) may take several forms. The visualization corresponds for example to:

- associating a first color (for example green) to the pixels of the first object (called first pixels) and to the pixels of the second object(s) (called second pixels) which are in a distance from each other less than the first distance threshold. The first color is different from the current color associated with the first and second pixels and is advantageously predetermined or set by the user. According to a variant, a second color (different from the first one, for example red) is allocated to the first and second pixels when each and every distance computed between a first pixel and a second pixel is greater than the first distance threshold, this second color being indicative of the absence of a contact between the first object and the second object; and/or

- displaying a message indicating the presence and/or the absence of a contact between the first and second objects, the message being for example displayed in a pop-up window in the area of the image located between the first object and the second object. An example of a message indicating the presence of a contact being "CONTACT" and an example of a message indicating the absence of a contact being "NO CONTACT"; and/or

- rendering a sound message, for example when the user clicks or taps on the first object and on the second object as to known whether there is a message, the sound message corresponding for example to a predetermined sound or to the word "CONTACT" rendered by vocal synthesis if a contact exists between the first object and the second object and the sound message being for example "NO CONTACT" rendered by vocal synthesis if no contact exists between the first object and the second object.

The visualization of a contact may also take the form of any combination of the examples of the list above, for example the allocation of the first color to the first and second pixels at a distance less than the first distance threshold and the rendering of a sound message.

**Figure 4** illustrates a part 4 of the image 310 or a part 4 of the frame buffer associated with the image 310 of figure 3, according to a specific and non-limitative embodiment of the invention. This part 4 comprises nine pixels 40 to 48 according to this example. The pixel 40 corresponds to the projection of the fragment P 321 into the image 31 and the pixels N1 41, N2 42, N3 43, N4 44, N5 45, N6 46, N7 47, and N8 48 surrounding the pixel P 40 form advantageously the neighbourhood of the pixel P 40. A first identifier 'Id A' is associated with the first pixels, i.e. with the first pixels P 40, N4 44, N6 46, N7 47 and N8 48 associated with the first object (for example the first object 32 of figure 3). A second identifier 'Id B' is associated with the second pixels, i.e. the second pixels N1 41, N2 42, N3 43 and N5 45 associated with the second object (for example the second object 33 of figure 3). The first identifier 'Id A' is advantageously different from the second identifier 'Id B'. The first and second identifiers correspond advantageously to alpha-numeric values, for example coded on 8, 10 or 12 bits, which are for example stored in the frame buffer associated with the image 310. According to this example, the identifier associated with a pixel of the frame buffer is stored for each pixel in the $\alpha$ channel, the color information of the pixel being stored in the RGB channels.

According to a variant, the identifiers associated with the pixels of the image 310 are stored in a frame buffer different from the frame buffer comprising the attributes of the pixels (RGB or RGB$\alpha$), which means that at least two frame buffers are associated with the image.

Naturally, the number of pixels comprised in the part 4 of the image is not limited to 9 pixels and the number of pixels comprised in the neighbourhood of the pixel P is not limited to 8, but extends to any number of pixels, for example the part 4 comprises 5, 10, 25, 50, 100 pixels or more. The neighbourhood of a first pixel P comprises for example any pixels of the frame buffer located at a distance which remains less than a second distance threshold from the first pixel P, the second distance threshold being either predetermined or set by the user modelling the virtual scene. The second distance threshold may be expressed in meters or in pixels and is for example equal to 2, 3, 5, 10, 25 or 50 pixels. The number of objects with which are associated the pixels of the part 4 is also not limited to two objects but extends to any number of objects greater than 2, for example 3, 4, 5, 10, 20 or 50 objects.

According to a variant, the part 4 of the image 310 corresponds to an area of the image 310 selected by the user modelling the virtual scene, the selection being performed by the means of a mouse or by the finger if the screen on which is rendered the image 310 is a touch screen. According to this variant, the size of the selected area is defined by the user and the number of pixels comprised in it depends on the resolution of the image. According to this variant, the area of the image selected by the user takes any form, for example a round or a parallelepiped (for example a rectangle or a square). For some or all of the pixels (called first pixels) of this area, the distances between these pixels (i.e. the first pixels) and the pixels of their neighbourhood (called second pixels) are computed as described with regard to figure 5.

**Figure 5** illustrates a method for computing the distances between some of the pixels of figure 4, according to a specific and non-limitative embodiment of the invention. Figure 5 illustrates the fragments P 50, N1 51 and N5 55 of the virtual scene as seen from the point of view 31 corresponding respectively to the pixels P 40, N1 41, and N5 45 of figure 4. The cone of view 500 corresponds to the point of view of the user limited to the neighbourhood of the fragments P 50 in the world space (or equivalently to the neighbourhood of the pixel P 40 in image space). The distance separating the fragment P 50 from the fragment N1 51 is denoted d1 501 and the distance separating the fragment P 50 from the fragment N5 55 is denoted d2 505. Distances d1 501 and d5 505 are computed in the world space, i.e. in the 3D space of the virtual scene and are associated with the corresponding pixels pairs (P, N1) and (P, N5) of the part 4 of the image 310. The distance d1 501 is advantageously computed by using the 3D coordinates $(x_P, y_P, z_P)$ of the fragment P 50 and the coordinates $(x_{N1}, y_{N1}, z_{N1})$ of the fragment N1 51 and the distance d5 505 is advantageously computed by using the 3D coordinates $(x_P, y_P, z_P)$ of the fragment P 50 and the coordinates $(x_{N5}, y_{N5}, z_{N5})$ of the fragment N5 55, the coordinates $(x_P, y_P, z_P)$, $(x_{N1}, y_{N1}, z_{N1})$ and $(x_{N5}, y_{N5}, z_{N5})$ being expressed in the world space represented by an orthonormal base of 3 vectors (X, Y, Z). d1 and d5 are obtained via the following equations:

$$d1 = \sqrt{(x_{N1} - x_P)^2 + (y_{N1} - y_P)^2 + (z_{N1} - z_P)^2} \qquad \text{equation 1}$$

$$d5 = \sqrt{(x_{N5} - x_P)^2 + (y_{N5} - y_P)^2 + (z_{N5} - z_P)^2} \qquad \text{equation 2}$$

The coordinates $(x_P, y_P, z_P)$, $(x_{N1}, y_{N1}, z_{N1})$ and $(x_{N5}, y_{N5}, z_{N5})$ of the fragments P 50, N1 51 and N5 55 are advantageously associated with the pixels P 40, N1 41 and N5 45 of the frame buffer associated with the image 310 corresponding respectively to the fragments P 50, N1 51 and N5 55 and are stored in the frame buffer comprising the attributes of these pixels P 40, N1 41 and N5 45. According to a variant, these coordinates are stored in an additional frame buffer associated with the image 310.

According to a variant, the 3D coordinates of the fragments/pixels P, N1 and N5 are not stored in a frame buffer but are recovered from the depths associated with the pixels P, N1, N5 and stored in a depth buffer associated with the image 310 (as well known to the skilled person in the art) and by using the virtual camera parameters (the camera corresponding to the point of view 31) which are known as the image 310 is a synthesis image composed via CGI.

To determine whether a contact exists between P and N1 on one hand and between P and N5 on the other hand, the distances d1 and d5 are compared with a first distance threshold $\varepsilon$, a contact being detected if the distance is less than the first distance threshold ε. According to the example of figure 5, we have d5 < ε and d1 > ε which means that a contact is detected between the pixels P and N5 and that a contact is not detected between the pixels P and N1. Since a contact is detected between at least one pixel of the first object and at least one pixel of the second object, a contact is detected between the first object and the second object. As to visualize the contact, the attributes of the fragment P are advantageously modified, i.e. a first color different from the current color attributed to the pixels P is allocated to the pixels P.

In an advantageous way, distances are computed between the first pixel P and each and every second pixel of the neighbourhood of the pixel P (i.e. each and every pixel of the neighbourhood of P having an identifier different from the identifier of the pixel P), i.e. for the pixels N1, N2, N3 and N5 according to the example of figure 4. According to a variant, distances are computed between the first pixel P and only a part of the second pixels of the neighbourhood of the pixel P, for example 1 second pixel out of 2 or 1 second pixel out of 3, etc.

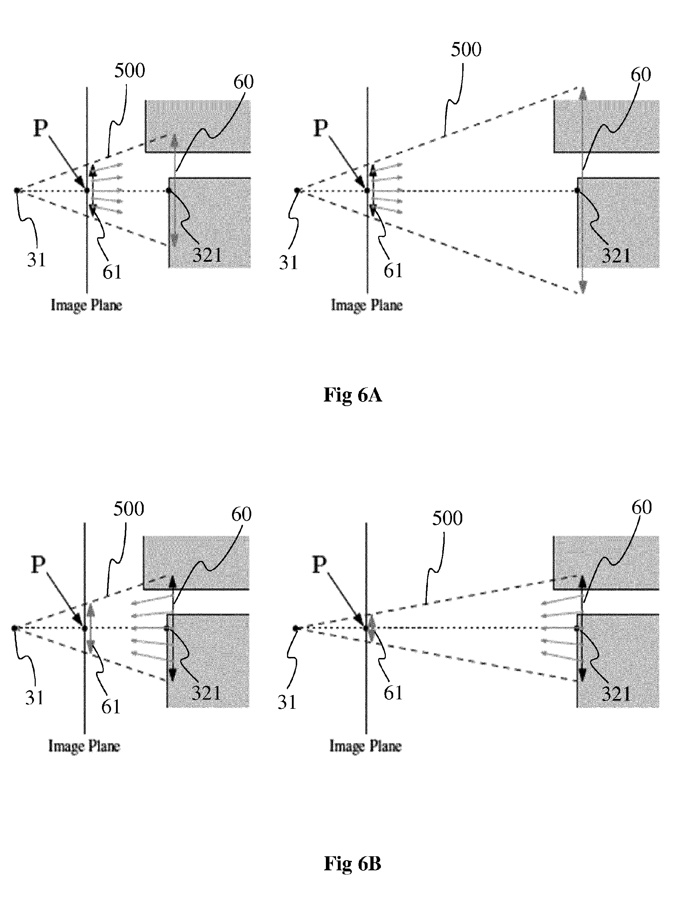

**Figures 6A and 6B** illustrate two different methods for sampling the image or the part(s) of the image representing areas located between two objects, i.e. areas of the image wherein contact(s) may occur. Elements of the figures 6A and 6B that have already been identified in figure 3 keep the same references as in figure 3, for example the point of view or virtual camera 31, the pixel P corresponding to the fragment 321 of the part 61 of the image including the neighbourhood of the pixel P. An arrow 60 represents the area of the virtual scene covered by the viewing cone 500 having the point of view 31 for origin. The arrow 60 corresponds for example to the surface S comprising the fragments belonging to the neighbourhood of the fragment 321 of the virtual scene visible from the point of view 31.

**Figure 6A** illustrates an image-based sampling wherein the sampling space is constant in image size (arrow 51), according to a specific and non-limitative embodiment of the invention. The main advantage of this sampling is that regardless of the virtual scene content, the number of samples per pixel fetched from the frame buffer associated with the image remains constant, and the texture caching behavior is predictable. In other words, the number of fragments of the virtual scene associated with the pixels of the frame buffer associated with the part 51 of the image 310 remains constant, whatever the distance between the point of view 31 and the objects of the virtual scene is. Nevertheless, one problem associated with this sampling is that samples in object space may be very far away from the considered 3D fragment 321, as illustrated on the right-hand part of figure 6A, thus leading to inconsistent local geometry inspection. The size of the fragments of the virtual scene corresponding to the pixels of the frame buffer 310 depends from the distance between the point of view and the arrow 60. On the example illustrated on the left-hand side of Figure 6A, this distance is small and the size of the fragments of the virtual scene visible from the point of view 31 is relatively small. In contrast, on the example illustrated on the right-hand side of Figure 6A, this distance is big and the size of the fragments of the virtual scene visible from the point of view 31 is relatively big, which may leads to some imprecision when computing the distance between two fragments of the virtual scene as described with regard to Figure 5.

**Figure 6B** illustrates a world-space based sampling wherein the size of the sampling varies in image space (arrow 51), while it remains constant in object space (or world-space) illustrated by the arrow 60, according to a specific and non-limitative embodiment of the invention. The samples may be defined first in world-space as offsets to the fragment coordinates read in the frame buffer, and then projected back in image space to read corresponding coordinates and identifier. With this method, many different objects far away from the camera will generate almost no contact visualization. This is consistent with the idea where contacts visualization helps artists set up correctly their assets to avoid floating objects or inter-penetrations: there may be no need to correct a scene with floating objects when the impact of this error is less than a pixel. However, in case of important close-ups, this method may lead to texture fetches far away from the central fragment position, and thus break the texture cache consistency at runtime. This is because the image size of the filtering kernel in this case depends on the fragments' 3D coordinates, contrary to the image-space filtering method. Current graphics hardware generally have large amounts of texture caches, so this issue may only occur either on much older hardware, or with meaningless shader parameterization (e.g. using a kernel that covers the whole image). The kernel of this filter being designed to fit the underlying geometry, it produces more accurate results and is more artist-friendly in term of parameterization than the method of Figure 6A.

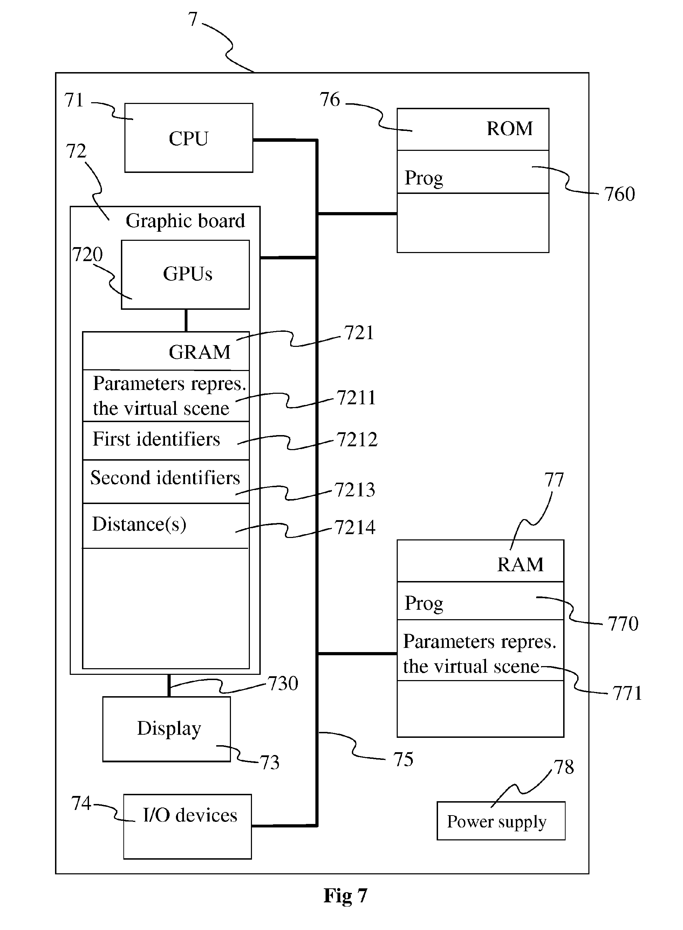

**Figure 7** diagrammatically shows a hardware embodiment of a device 7 configured for the modelling, the animating and the rendering of a virtual scene, and more specifically for detecting and visualizing contacts between first and second objects of the virtual scene. The device 7 is also configured for the creation of display signals of one or several synthesis images representative of the virtual scene. The device 7 corresponds for example to a personal computer (PC), a laptop, a tablet, a Smartphone or a games console.

The device 7 comprises the following elements, connected to each other by a bus 75 of addresses and data that also transports a clock signal:

- a microprocessor 71 (or CPU),
- a graphics card 72 comprising:

  • several Graphical Processor Units (or GPUs) 720,

- a Graphical Random Access Memory (GRAM) 721,

- a non-volatile memory of ROM (Read Only Memory) type 76,
- a Random Access Memory or RAM 77,
- one or several I/O (Input/Output) devices 74 such as for example a keyboard, a mouse, a webcam, and
- a power source 78.

The device 7 also comprises a display device 73 of display screen type directly connected to the graphics card 72 to display synthesized images calculated and composed in the graphics card, for example live. The use of a dedicated bus to connect the display device 73 to the graphics card 72 offers the advantage of having much greater data transmission bitrates and thus reducing the latency time for the displaying of images composed by the graphics card. According to a variant, a display device is external to the device 7 and is connected to the device 7 by a cable or wirelessly for transmitting the display signals. The device 7, for example the graphics card 72, comprises an interface for transmission or connection (not shown in figure 7) adapted to transmit a display signal to an external display means such as for example an LCD or plasma screen or a video-projector.

It is noted that the word "register" used in the description of memories 721, 76, and 77 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 71 loads and executes the instructions of the program contained in the RAM 77.

The random access memory 77 notably comprises:

- in a register 770, the operating program of the microprocessor 71 responsible for switching on the device 7,
- parameters 771 representative of the virtual scene (for example modelling parameters of the object(s) of the virtual scene, lighting parameters of the virtual scene, parameters for visualizing the contacts (e.g. first and second colours, sound message, textual message), the first and second distance thresholds, etc.).

The algorithms implementing the steps of the method specific to the invention and described hereafter are stored in the memory GRAM 721 of the graphics card 72 associated with the device 7 implementing these steps. When switched on and once the parameters 771 representative of the environment are loaded into the RAM 77, the graphic processors 720 of the graphics card 72 load these parameters into the GRAM 721 and execute the instructions of these algorithms in the form of microprograms of "shader" type using HLSL (High Level Shader Language) language or GLSL (OpenGL Shading Language) for example.

An example in annotated pseudo-code (annotations following the sign '//') of such a shader program is as follow:

```
// Contact visualization algorithm for a given pixel
// Inputs are the pixel color and additional data, these data comprising the
// corresponding fragment identifier and the 3D position in world space.
// Pixel RGBA represents a 4-component vector in which the fragment color,
// identifier and position can be stored.
// The output is the final color of the pixel which is identical to inputColor if no
// contact is detected, or to a predefined color if a contact is detected.
Input  PixelRGBA inputColor;
Input  PixelRGBA inputData;
Output PixelRGBA outputColor;


// Extract from the 4-component inputData the 3D position in world space of
// the fragment, and store it in a 3-component vector. For instance, the
// coordinates X, Y and Z stored in pixel pos can be the 1st, 2nd and 3rd
// components of inputData, respectively.
Vector3D pixelPos = extract3DPos( inputData ); //


// Extract from the 4-components inputData the identifier of the fragment. This
// is a scalar (or 1-component) value
PixelId pixelID  = extractID( inputData );


// Initializing a flag that indicates whether a contact is detected in the process.
Boolean contactDetected = false;


// Parsing the neighboring pixels of the central pixel P
For all neighboring pixels


{
    // Get the pixels coordinates of the ith neighbor of the central pixel P.
    // These coordinates are defined in image-space and are stored in a
    // 2-components vector.
    Vector2D sampleImagePos = (...);


    // Given these neighboring pixel coordinates, reading in the frame buffer
    // the associated fragment data that have the same format as inputData.
```

```
PixelRGBA sampleData    = getPixel( sampleImagePos );


// Similarly to the variable pixelID, extracting from the 4-components vector
// the neighboring fragment's ID
PixelId  sampleID     = extractID( sampleData );


// If the IDs of the central pixel (pixelID) and the neighboring sample
// (sampleID) are different, there may be a contact
If sampleID != pixelID Then
{
    // Similarly to variable pixelPos, extracting from the 4-component vector
    // the neighboring fragment's 3D coordinates in world space
    Vector3D samplePos = extract3DPos( sampleData );


    // If the distance between the 3D coordinates of the central pixel
    // pixelPos and the 3D coordinates of the neighboring pixel samplePos
    // is smaller than some pre-defined or user-defined value threshold,
    // then a contact is detected and the detection flag is set to 'true'
    If distance( samplePos, pixelPos ) < threshold
    Then contactDetected = true;
}
}


// If a contact has been detected while parsing the neighboring pixels, then
// setting the output color to a pre-defined red color (RED for example).
// Otherwise, setting the output color to the input color.
If contactDetected
Then outputColor = RED;
Else outputColor = inputColor;
```

The random access memory GRAM 421 notably comprises:

- in a register 7211, the parameters representative of the virtual scene,
- in a register 7212, the first identifiers identifying the first pixels of the first object,
- in a register 7213, the second identifiers identifying the second pixels of the second object(s),
- one or more values 7214 representative of the distance(s) between the first pixel(s) and the second pixel(s).

According to a variant, the first and second identifiers and the distances are stored in the RAM 77 and processed by the microprocessor 71.

According to another variant, a part of the RAM 77 is assigned by the CPU 71 for storage of the identifiers and the distances if the memory storage space available in GRAM 721 is insufficient. This variant however causes greater latency time in the composition of an image comprising a representation of the environment composed from microprograms contained in the GPUs as the data must be transmitted from the graphics card to the random access memory 77 passing by the bus 75 for which the transmission capacities are generally inferior to those available in the graphics card for transmission of data from the GPUs to the GRAM and vice-versa.

According to another variant, the power supply 78 is external to the device 7.

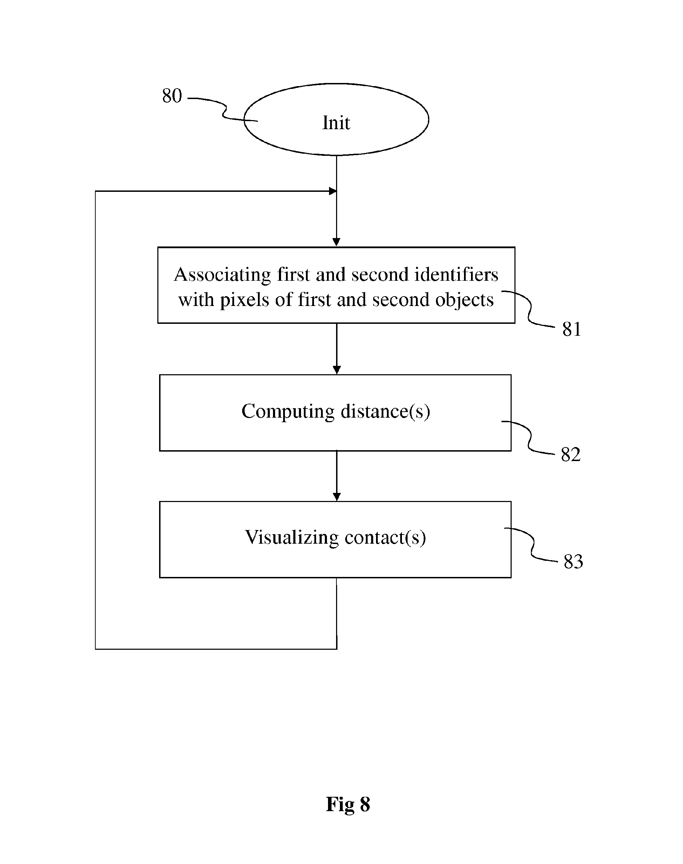

**Figure 8** shows a method for visualizing contact(s) between a first object and one or more second objects of a virtual scene implemented in a device 7, according to a first non-restrictive particularly advantageous embodiment of the invention.

During an initialisation step 80, the different parameters of the device 7 are updated. In particular, the parameters representative of the virtual scene represented in the synthesis image are initialised in any way.

Then during a step 81, a first identifier is associated with the first pixels of the first object, i.e. the first pixels representing the first object in the image representing the virtual scene according to a given point of view. A second identifier is also associated with the second pixels of the second object, i.e. the second pixels representing the second object in the image representing the virtual scene according to the given point of view.

Advantageously, the first identifier is associated with the first object (and with its first pixels / fragments) when modelling the first object and the second identifier is associated with the second object (and with its second pixels / fragments) when modelling the second object. According to a variant, an identifier is associated with each and every object of the scene when the scene has been completely modelled. According to another variant, an identifier is associated with the first and second object when the user/artist selects for them for determining and visualizing whether a contact exists between the first and second objects.

The first identifier is different from the second identifier. Advantageously, the identifiers associated with the objects of the scene are unique, i.e. a unique identifier identifies only one object. According to a variant, one single identifier is associated with two or more different objects when these two or more different objects are located far away from each other, i.e. at a distance in the image or in the virtual scene greater than a distance threshold, i.e. when no contact can occur between these two or more objects.

Then during a step 82, the distance(s) between one first pixel of the object and one or more second pixels of the second object(s) located in the neighbourhood of the first pixel is (are) computed. The neighbourhood of the first pixel corresponds for example to a given number of pixels surrounding the first pixels in the image, this number of pixels being either predetermined or set by the user modelling the virtual scene. According to another example, the neighbourhood of the first pixel corresponds to the pixels of the image located at a distance from the first pixel, which is less than a second distance threshold (expressed in pixels for example, either predetermined or set by the user).

Step 82 is advantageously reiterated for each pixel (which becomes a first pixel) of the image belonging to an object of the virtual scene. According to a variant, step 82 is performed for only a part of the pixels of the image belonging to an object of the virtual scene, for example one pixel out of 2, 3, 5 or 10 for example. According to another variant, the step 82 is reiterated only for the pixels belonging to specific areas of the images, i.e. areas where there exists a high probability that a contact between two objects exists. According to another variant, the step 82 is performed for only pixels or some of the pixels of one or more areas selected by the user, the selection of these areas being done by using a pointing device like a mouse, the finger if the image is displayed on a touch screen. According to a further variant, the step 82 is performed for all or some of the pixels of first and second objects selected by the user, for example when the user is interesting in visualizing whether a contact between a specific first object and one or more specific second objects exists. According to this variant, the first pixels for which the distances with second pixels are computed are all pixels or some pixels of the selected objects or only some pixels located in areas where a contact has a chance to occur.

The distance between a first pixel and a second pixel is advantageously computed in the space of the virtual scene, i.e. the world space, which is a three-dimensional space, by the means of an equation similar to equation 1 or 2. The computing of the distance uses geometrical information associated with the first pixel and geometrical information associated with the second pixel. Geometrical information corresponds for example to the coordinates of the fragments of the virtual scene corresponding to the first pixel and the second pixels, which are three-dimensional coordinates. According to a variant, the geometrical information corresponds to the depths associated with the first and second pixels (for example stored in a depth map or depth buffer associated with the image), the depth being used in association with the parameters of the virtual camera (the parameters being the field of view and the clipping planes, these parameters forming the projection matrix of the camera) used for rendering the image according to the point of view.

According to a variant, the pixels of the neighbourhood of the first pixels are parsed as to select the pixels having an identifier different from the first identifier associated with the first pixel. This selection of the pixels of the neighbourhood of the first pixels enables to compute the distance(s) between the first pixel and other pixels of its neighbourhood for only the pixels having an identifier different from the first pixels, i.e. the second pixels. These variant has the advantage of reducing the computation amount for implementing the method.

Then, during a step 83, a contact between the first object and the second object(s) is visualized if at least one of the distance computed at step 52 remains less a first distance threshold, if there is at least one first pixel located at a distance from at least one second pixel of the second object(s) which is less than the first distance threshold. The visualization is done by performing one or more of the following acts:

- associating a first predetermined color with the first pixel(s) if the computed distance(s) remains less than the first distance threshold, the first color being different from the current color of the first pixel; and/or
- associating a first predetermined texture with the first pixel(s) if the computed distance(s) remains less than the first distance threshold, and/or
- rendering a first information representative of the presence of a contact if the computed distance(s) remains less than the first distance threshold, for example displaying a textual message and/or rendering a sound message.

According to a variant, if no computed distance is less than the first distance threshold, or in other words if all distances computed for all the first pixels of the first object and all second pixels of the second object(s) are greater than the first distance threshold, the absence of any contact between the first object and the second is visualized by performing one or more of the following acts:

- associating a second predetermined color with the first pixel(s) if the computed distance(s) remains greater than the first distance threshold, the second color being different from the current color of the first pixel and from the first color; and/or
- associating a second predetermined texture with the first pixel(s) if the computed distance(s) remains greater than the first distance threshold; and/or
- rendering a second information representative of the absence of any contact if the computed distance(s) remains greater than the first distance threshold, for example displaying a textual message and/or rendering a sound message.

The steps 81, 82 and 83 are advantageously reiterated for several images of the virtual scene according to several points of view.
Naturally, the invention is not limited to the embodiments previously described.
In particular, the invention is not limited to a method for visualizing a contact between objects of a virtual scene but also extends to any device implementing this method and notably any devices comprising at least one GPU. The implementation of calculations necessary to the generation of elementary geometries, to the determination of index values to be assigned to the elementary geometries is not limited either to an implementation in shader type microprograms but also extends to an implementation in any program type, for example programs that can be executed by a CPU type microprocessor.
The use of the invention is not limited to a live utilisation but also extends to any other utilisation, for example for processing known as postproduction processing in a recording studio for the display of synthesis images for example.
The invention also relates to a method for detecting the presence or the absence of a contact between objects of a virtual scene or to a contact(s) visualization filtering method, which is built upon the deferred or post-processing pipeline principle, where additional information is stored in a texture at render time, on a per-pixel basis, using the render-to-texture paradigm. In this method, two pieces of information associated to the object that is rasterized are stored: its geometric position (advantageously in scene units) and a unique object identifier. In a subsequent rendering pass, the complete texture (shaded scene and additional information) is mapped on a full-screen quad and the filtering process is performed in an associated fragment shader. During the filtering stage, for a given pixel P and its associated position $P_{pos}$ and identifier $P_{id}$, a contact is detected if there exist in its neighborhood at least one pixel P' for which:

$$\left\| P_{pos} - P'_{pos} \right\| < \varepsilon_{pos}$$

$$P_{id} \neq > P'_{id}$$

The value of the scalar $\varepsilon_{pos}$ depends on the scene and reflects the artist-driven tolerance below which two objects can be considered to be in contact. In practice, once a contact is detected for a fragment, the visual feedback can take different forms. For instance, the input fragment color can be blended with an artist-defined color in case of contact and kept unaltered otherwise. The amount of alteration of the input pixel could also be proportional to the portion of contacting fragments in the neighborhood of the input fragment.
During the initial render pass, objects need to store for each pixel/fragment their identifier and position in a dedicated render buffer. Though 16 bits-per-component (bpc) may be sufficient in general to measure small geometric distances, it limits the number of object identifiers to 65536. In production scenes comprising a huge number of objects, this could be too small. 32 bpc render buffers may then be used. As for geometric positions, they can be stored either explicitly in the same render buffer using three floating point values, or they can be inferred in the post-processing filtering pass using the depth buffer and virtual camera intrinsic parameters. In the final rendering pass, where contacts are searched for, any sampling strategy known from the skilled person in the art may be used. Poisson-disk samples (defined as offsets from the central point in the unit disk) are for example used rather than say box filtering, so as to keep a constant number of filtering samples regardless of the filter kernel size (which varies with algorithm and user parameters). Increasing the kernel size will thus have a much smaller impact on performance, which may decrease slightly due to texture cache misses rather than because of an increased number of texture fetches.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

The present invention may be used in video game applications for example, whether via programs that can be executed in a PC or portable type computer or in specialised game consoles producing and displaying images live. The device 7 described with respect to figure 7 is advantageously equipped with interaction means such as a keyboard a mouse, a joystick or any other modes for introduction of commands such as for example vocal recognition being also possible.

**Claims**

1. Method for visualizing contact between a first object (32) and at least a second object (33) of a virtual scene (3), **characterized in that** the method comprises the steps of:

- associating (81) a first identifier with first pixels associated with the first object and at least a second identifier with second pixels associated with the at least a second object,
- for at least one first pixel (40), computing (82) at least a distance (501, 505) in world space between the 3D position projected on said at least one first pixel (40) and the 3D position projected on at least one second pixel (41, 45) located in the neighbourhood of the at least one first pixel,
- visualizing (83) at least a contact between the first object (32) and the at least a second object (33) if the at least a computed distance (501, 505) remains less than a first threshold distance.

2. Method according to claim 1, wherein the computing of the at least a distance (501, 505) uses geometrical information associated with the at least one first pixel (40) and the at least one second pixel (41, 45).

3. Method according to one of claims 1 to 2, wherein the method further comprises a step of visualizing the absence of any contact between the first object (32) and the at least a second object (33) if the at least a computed distance (501, 505) remains greater than the first threshold distance.

4. Method according to one of claims 1 to 3, wherein the visualizing comprises at least one of the following acts:

   - associating a first predetermined color with said at least one first pixel (40) and said at least one second pixel (41, 45) if the at least a computed distance remains less than the first threshold distance,
   - associating a second predetermined color with said at least one first pixel (40) and said at least one second pixel (41, 45) if the at least a computed distance remains greater than the first threshold distance,
   - rendering an information representative of the presence of a contact,
   - rendering an information representative of the absence of any contact.

5. Method according to one of claims 1 to 4, wherein the neighbourhood of the at least one first pixel (40) includes pixels located at a distance less than a second distance threshold from said at least one first pixel.

6. Method according to one of claims 1 to 5, wherein the method further comprises the steps of:

   - selecting the second pixel or second pixels (41, 42, 43, 45) having an associated second identifier different from the first identifier,
   - computing the at least one distance between the at least one first pixel and the at least one second pixel for only the selected at least one second pixel.

7. Device (7) configured for visualizing contact between a first object and at least a second object of a virtual scene, **characterized in that** the device comprises at least a processor (720) configured for

   - associating a first identifier with first pixels associated with the first object and at least a second identifier with second pixels associated with the at least a second object,
   - for at least one first pixel, computing at least a distance in world space between the 3D position projected on said at least one first pixel and the 3D position projected on at least one second pixel located in the neighbourhood of the at least one first pixel,
   - visualizing at least a contact between the first object and the at least a second object if the at least a computed distance remains less than a first threshold distance.

8. Device according to claim 7, wherein the at least a processor (720) is a Graphical Processor Unit (GPU).

9. Device according to one of claims 7 to 8, wherein the at least a processor (720) uses geometrical information associated with the at least one first pixel and the at least one second pixel for computing of the at least a distance.

10. Device according to one of claims 7 to 9, wherein the at least a processor (720) is further configured for visualizing the absence of any contact between the first object and the at least a second object if the at least a computed distance remains greater than the first threshold distance.

11. Device according to one of claims 7 to 10, wherein the at least a processor (720) is further configured for:

   - associating a first predetermined color with said at least one first pixel and said at least one second pixel if the at least a computed distance remains less than the first threshold distance,

- associating a second predetermined color with said at least one first pixel and said at least one second pixel if the at least a computed distance remains greater than the first threshold distance,
- rendering an information representative of the presence of a contact,
- rendering an information representative of the absence of any contact.

12. Device according to one of claims 7 to 11, wherein the neighbourhood of the at least one first pixel includes pixels located at a distance less than a second distance threshold from said at least one first pixel.

13. Device according to one of claims 7 to 12, wherein the at least a processor (720) is further configured for:

- selecting the second pixel or second pixels having an associated second identifier different from the first identifier,
- computing the at least one distance between the at least one first pixel and the at least one second pixel for only the selected at least one second pixel.

14. Computer program product, **characterized in that** it comprises instructions of program code for executing steps of the method according to one of claims 1 to 6, when said program is executed on a computer.

15. A processor readable medium having stored therein instructions for causing a processor to perform at least the steps of the method according to any of claims 1 to 6.

**Fig 1**

**Fig 2**

**Fig 3**

4

**Fig 4**

41  N1
    Id B

42  N2
    Id B

43  N3
    Id B

44  N4
    Id A

40  P
    Id A

45  N5
    Id B

46  N6
    Id A

47  N7
    Id A

48  N8
    Id A

51  N1

501
$d1$

55  N5
$d5$

P
50  505

51  N1  P  N5  55
      50

500

31
Camera

**Fig 5**

**Fig 6A**

**Fig 6B**

7

71 — CPU

72 — Graphic board

720 — GPUs

721 — GRAM

7211 — Parameters repres. the virtual scene

7212 — First identifiers

7213 — Second identifiers

7214 — Distance(s)

730 — Display

73 — Display

74 — I/O devices

76 — ROM

760 — Prog

77 — RAM

770 — Prog

771 — Parameters repres. the virtual scene

75

78 — Power supply

**Fig 7**

80 —

Init

Associating first and second identifiers
with pixels of first and second objects

— 81

Computing distance(s)

— 82

Visualizing contact(s)

— 83

**Fig 8**

Europäisches
Patentamt

European
Patent Office

Office européen
des brevets

# EUROPEAN SEARCH REPORT

Application Number

EP 14 16 6201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BACIU G ET AL: "RECODE: an image-based collision detection algorithm", COMPUTER GRAPHICS AND APPLICATIONS, 1998. PACIFIC GRAPHICS '98. SIXTH PACIFIC CONFERENCE ON SINGAPORE 26-29 OCT. 1998, LOS ALAMITOS, CA, USA,IEEE COMPUT. SOC, US, 26 October 1998 (1998-10-26), pages 125-133, XP010315495, DOI: 10.1109/PCCGA.1998.732079 ISBN: 978-0-8186-8620-7 | 1-14 | INV. G06T19/00 |
| Y | * abstract * * chapter 3.1 Object-Space Collision Detection; chapter 3.2 Screen-Space Collision Detection; chapter 4 The RECODE algorithm; * * figures 1, 2, 8 * | 1-14 | |
| Y | Bruno Heidelberger ET AL: "Detection of Collisions and Self-collisions Using Image-space Techniques", Journal of WSCG, Vol. 12, No. 1-3, ISSN 1213-6972 WSCG 2004, Feb 2-6, 2004, Plzen, Czech Republic, 2 February 1998 (1998-02-02), pages 1-8, XP055081253, Retrieved from the Internet: URL:http://beosil.com/download/CollisionDe tectionComparison_WSCG04.pdf [retrieved on 2013-09-26] * abstract * * chapter 6 * | 1-14 | TECHNICAL FIELDS SEARCHED (IPC) G06T |

-/--

The present search report has been drawn up for all claims

| Place of search | Date of completion of the search | Examiner |
|---|---|---|
| Berlin | 22 July 2014 | Vollmann, Karl |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.....................................................................
& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 14 16 6201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2008/014127 A1 (INTEL CORP [US]; SATHE RAHUL P [US]; LAKE ADAM T [US]) 31 January 2008 (2008-01-31) * abstract * * figures 2-4 * * paragraph [0011] - paragraph [0013] * * paragraph [0040] - paragraph [0041] * ----- | 1-14 | |

TECHNICAL FIELDS
SEARCHED (IPC)

The present search report has been drawn up for all claims

| Place of search | Date of completion of the search | Examiner |
|---|---|---|
| Berlin | 22 July 2014 | Vollmann, Karl |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 14 16 6201

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2014

| Patent document cited in search report | Publication date | Patent family member(s) | Publication date |
|---|---|---|---|
| WO 2008014127 A1 | 31-01-2008 | CN 101496067 A | 29-07-2009 |
| | | EP 2047430 A1 | 15-04-2009 |
| | | JP 4842379 B2 | 21-12-2011 |
| | | JP 2009545075 A | 17-12-2009 |
| | | US 2008024491 A1 | 31-01-2008 |
| | | WO 2008014127 A1 | 31-01-2008 |

EPO FORM P0459

For more details about this annex : see Official Journal of the European Patent Office, No. 12/82